# EUROPEAN PATENT APPLICATION

(11) **EP 1 418 345 A1**
(43) Date of publication of application: **12.05.2004**
(21) Application number: 02738804.0
(22) Date of filing: 26.06.2002
(51) Int. Cl.: F16B 12/20, F16B 9/02, A47B 47/04

(54) **CONNECTION STRUCTURE FOR CONNECTING MEMBER TIP PARTS INTO MOUNTING HOLES**

(30) Priority: 17.07.2001 JP 2001216423
(71) Applicant: Iris Ohyama, Inc., Sendai-shi, Miyagi-ken 980-8510 (JP)
(72) Inventor: AWAJI, Yuichi c/o KAKUDA PLANT, IRIS OHYAMA, INC., Kakuda-shi, Miyagi 981-1596 (JP); NAKAJIMA, Satoshi KAKUDA PLANT, IRIS OHYAMA, INC., Kakuda-shi, Miyagi 981-1596 (JP)
(74) Representative: Musker, David Charles
(86) International application number: PCT/JP2002/006425
(87) International publication number: WO 2003/008814

(57) **Abstract**

The present invention relates to a connecting configuration for connecting a column tip portion 7 of a column or the like to a mounting hole 11 of a board material such as a wooden top board 9 or the like. A connecting member 15 is introduced between the column tip portion 7 and the mounting hole 11 for fixing the column tip portion 7 to the mounting hole 11. The connecting member 15 comprises a member body 21 formed so as to be fit to the column tip portion 7, and support portions 23 provided to the member body 21 for supporting the member body 21 pushed into the mounting hole 11. Each support member 23 comprises a connecting arm 23a and a support wall portion 23b. The support wall portion 23b is tapered in the direction of insertion. The member body 21 and the support portions 23 include slip-preventing protrusions 21c and 23c.

## Description

### Technical Field

The present invention relates to a connecting configuration for connecting the tip of the member to a mounting hole, i.e., a column is connected to a wooden board such as a top board or a bottom board, which is employed for a sectional casing for storing and organizing clothes or small articles, for example.

### Background Art

As an example of a sectional casing employing wooden boards, a sectional casing formed of plastic has been proposed by the present applicant, which is disclosed in Japanese Registered Utility Model No. 3057166. All the components including a top board of the aforementioned sectional casing are formed of plastic, and accordingly, the sectional casing has the advantage of low costs and the like, as well as having the advantage of light weight for easy carrying, and thus, there is a widespread demand for such sectional casing in the market. On the other hand, in recent years, in many cases, a wooden top board is employed in such sectional casing to meet the preference of the user for natural materials. In general, the tip of a column formed of plastic is inserted to a mounting hole formed on the rear face of a wooden board, and is fixed with inserting screws or the like, so as to connect the column formed of plastic to the wooden board.

However, a preformed wooden board has the disadvantage of poor precision as compared with a preformed plastic board or the like, often leading to a problem of looseness between the mounting hole formed thereon and the tip of the column inserted thereto.

The present invention has been made in order to solve the above-described problem, and accordingly, it is an object thereof to provide a connecting configuration for connecting a column to a mounting hole formed on a wooden board, without being influenced by margin of error in the. size of the mounting hole formed of the wooden board.

### Disclosure of Invention

With a connecting configuration for connecting a member tip portion to a mounting hole according to the present invention, a connecting member is introduced between the member tip portion and the mounting hole, and the connecting member comprises a member body formed so as to be fit to the member tip portion, and support portions provided to the member body, for supporting the member body pushed into the mounting hole.

Furthermore, the aforementioned mounting hole includes flange portions on the entrance side thereof for securely supporting the member tip portion or the connecting member.

Furthermore, the connecting member may include flexible tips which bend outward at the time of insertion of the aforementioned member tip portion.

### Brief Description of the Drawings

Fig. 1 is a disassembled perspective view of a sectional casing according to a first embodiment.
Fig. 2 is a perspective view of a connecting member.
Fig. 3 a partially enlarged cross-sectional view of the sectional casing, taken along line X-X shown in Fig. 1.
Fig. 4 is a perspective view which illustrates a first modification.
Fig. 5 is a perspective view which illustrates a second modification.
Fig. 6 is a perspective view which illustrates a third modification.
Fig. 7 is a front view which illustrates a mounting hole and an end mill according to a second embodiment.
Fig. 8 is a perspective view which illustrates the mounting hole and the end mill according to the second embodiment.
Fig. 9 is a cross-sectional view taken along line A-A in Fig. 8.
Fig. 10 is a side view which illustrates a connecting member according to the second embodiment.
Fig. 11 is a partial front view which illustrates the connecting member according to the second embodiment.
Fig. 12 is a perspective view which illustrates a mounting hole according to a first modification of the second embodiment.
Fig. 13 is a cross-sectional view taken along line B-B in Fig. 12.
Fig. 14 is a side view which illustrates a connecting member according to the first modification of the second embodiment.
Fig. 15 is a perspective view which illustrates a mounting hole according to a second modification of the second embodiment.
Fig. 16 is a cross-sectional view taken along line C-C in Fig. 15.
Fig. 17 is a side view which illustrates a connecting member according to the second modification of the second embodiment.
Fig. 18 is a perspective view which illustrates a connecting member according to a third embodiment.
Fig. 19 is a perspective view which illustrates the inner face of the connecting member according to the third embodiment.
Fig. 20 is a cross-sectional view which shows the state wherein the connecting member according to the third embodiment is mounted to the mounting hole.
Fig. 21 is a cross-sectional view which illustrates a connecting member according to a modification of the third embodiment.
Fig. 22 is a perspective view which illustrates a connecting member according to a fourth embodiment.
Fig. 23 is a cross-sectional view which shows a state of the connecting member according to the fourth embodiment being partway mounted to the mounting hole.
Fig. 24 is a cross-sectional view which shows a state wherein the connecting member according to the fourth embodiment is mounted to the mounting hole.
Fig. 25 is a disassembled perspective view of a sectional casing according to a fifth embodiment.
Fig. 26 is an enlarged view of principal components of the sectional casing shown in Fig. 25.
Fig. 27 is a perspective view of a connecting member.
Fig. 28 is a cross-sectional view of the sectional casing, taken along line B-B shown in Fig. 26.
Fig. 29 is a disassembled perspective view of a sectional casing according to a modification of the fifth embodiment.
Fig. 30 is an enlarged view of principal components of the sectional casing shown in Fig. 29.
Fig. 31 is a perspective view of the connecting member shown in Fig. 29.

### Best Mode for Carrying Out the Invention

Description will be made below regarding a first embodiment according to the present invention with reference to the drawings.

Note that a sectional casing described in the present embodiment is an example of application to a connecting configuration for connecting a column to a wooden board. The present invention is not restricted to any particular arrangement, and may be applied to others, e.g., a table wherein a wooden top board is supported with columns, or the like. Furthermore, the wooden board may be used as a bottom board, for example. In a case of the top board, the column is connected to the rear face of the top board. On the other hand, in a case of the bottom board, the column is connected to the front face of the bottom board.

### (Basic configuration of sectional casing)

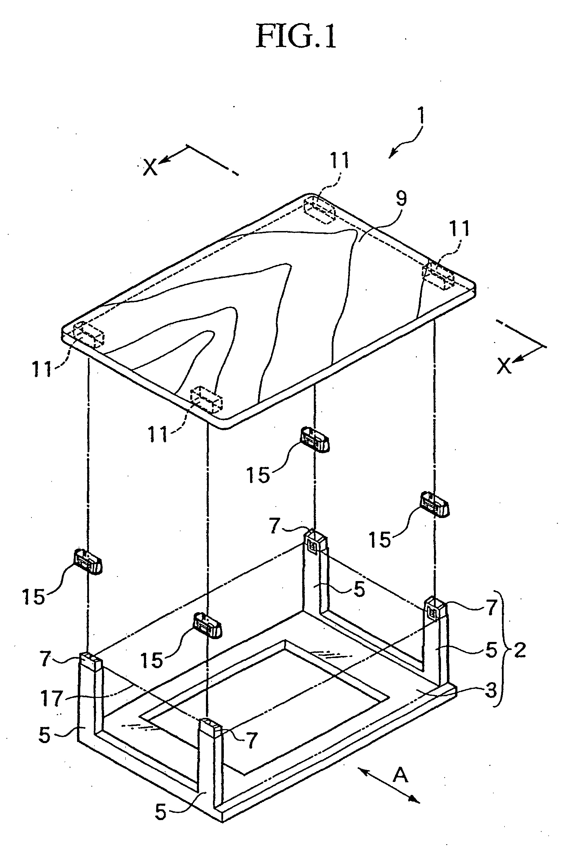

As shown in Fig. 1, a sectional casing 1 comprises a casing main unit 2 formed of plastic, a wooden top board 9 mounted on the upper side of the casing main unit 2, and a tray 17 formed of plastic, which is stored in the casing main unit 2. The casing main unit 2 includes a rectangular frame 3 forming the bottom thereof, and four columns 5, 5, .., erected from each corner of the rectangular frame 3. The casing main unit 2 has a configuration wherein the tray 17 denoted by imaginary lines can be detachably mounted in the direction of the arrow A shown in Fig. 1. While each column 5 is integrally formed with the rectangular frame 3, an arrangement may be made wherein separately formed columns 5 and rectangular frame 3 are assembled. Furthermore, an arrangement may be made wherein a wooden board is employed instead of the rectangular frame 3. Furthermore, an arrangement may be made wherein side boards (not shown) are mounted on the sides of the casing main unit 2, as viewed from the direction of the tray 17 being detachably mounted. Note that while the casing main unit 2 of the sectional casing 1 shown in Fig. 1 has a configuration including a single casing main unit 2, the sectional casing 1 may have a configuration wherein multiple casing main units 2 are stacked.

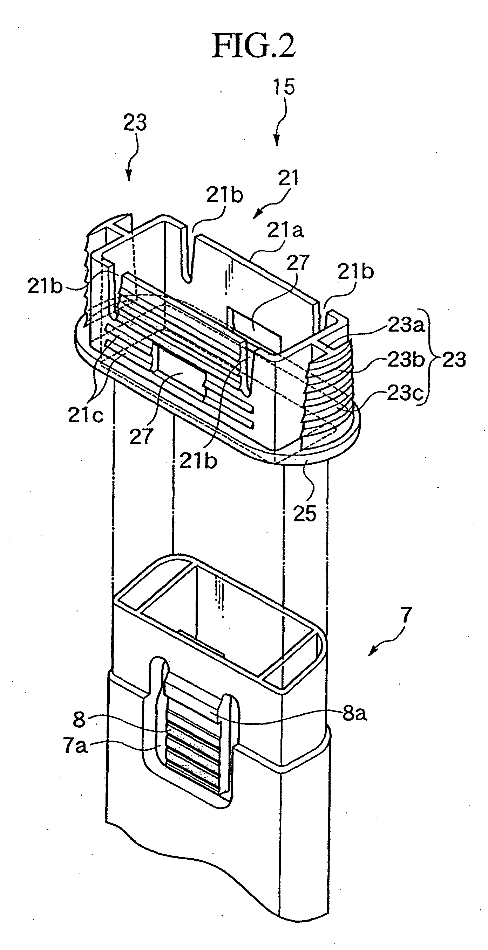

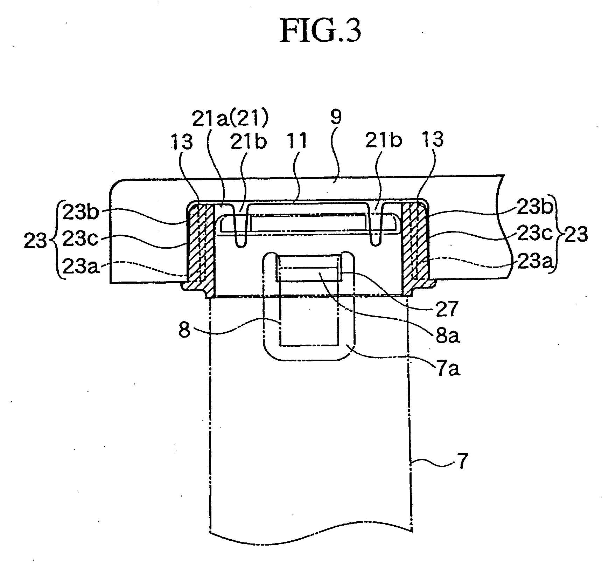

As shown in Fig. 2 and Fig. 3, column tip portions 7, each serving as a tip of a column 5, include a U-shaped groove 7a so as to form an elastic bending tip 8. Furthermore, the elastic bending tip 8 includes an engaging protrusion 8a on the base thereof. The elastic bending tip 8 has a configuration wherein external force applied to the elastic bending tip 8 causes change in the shape thereof, thereby pushing an engaging protrusion 8a into the column tip portion 7.

### (Configuration of wooden top board)

As shown in Fig. 1, the wooden top board 9 is formed in a rectangular shape with a somewhat larger size than the casing main unit 2. The portions of the wooden top board 9, each of which match positions of the columns 5 of the casing main unit 2, include four mounting holes 11, 11, 11, 11, drilled by an end mill or the like. As a result of formation of these holes, each mounting hole 11 includes an inner side face 13 on the side of the inner face thereof (see Fig. 3). The mounting holes 11 are formed with a slightly smaller inner size than the outer size of connecting members 15 so that the connecting members 15 can be pushed thereinto. The wooden top board 9 may be formed of a single board formed of wood, or may be formed of plywood, a particle board formed of wooden particles, or the like. Furthermore, printing a wood grain pattern on the surface of the top wooden board 9, or applying paper with a wood grain pattern print thereupon, is advantageous with regard to appearance.

### (Configuration of connecting member)

Description will be made regarding the connecting member 15 with reference to Fig. 2 and Fig. 3. The connecting member 15 is formed of plastic. The connecting member 15 generally comprises a member body 21, a pair of support portions 23 and 23 disposed on both sides of the member body 21, a mounting flange 25 disposed at the lower portion of the member body 21. The member body 21 includes a perimeter wall 21a for surrounding the column tip portion 7 fit thereto, multiple (or a single) slits 21b, ..., extending downward from the upper end of the perimeter wall 21a, multiple slip-preventing protrusions 21c formed on the outer face of the perimeter wall 21a. The slits 21b, ..., improve flexibility for enabling the perimeter wall 21a to be deformed, or enabling the shape thereof to be changed, at the time of the connecting member 15 being pushed into the mounting hole 11. The mounting flange 25 is included for coming into contact with the rear face of the wooden top board 9 so as to prevent looseness of the connecting member 15 at the time of the connecting member 15 being pushed into the mounting hole 11 of the wooden top board 9 as shown in Fig. 3. The perimeter wall 21a includes engaging openings 27 and 27. The engaging opening 27 engages with the engaging protrusion 8a of the column top portion 7 so as to prevent the column tip portion 7 from slipping from the connecting member 15 (perimeter wall 21a).

The support portions 23 comprise connecting arms 23a and 23a, extending from the perimeter wall 21a in the side direction thereof, and support wall portions 23b and 23b disposed at the tips the connecting arms 23a and 23a. Furthermore, the base portions of the connecting arms 23a and 23a, and the support wall portions 23b and 23b, are connected to the upper face of the mounting flange 25 for improving strength. Furthermore, each support wall portion 23b is tapered slightly upward from the base portion so as to facilitate pushing the connecting member 15 into the mounting hole 11, and each support wall portion 23b includes slip-preventing protrusions 23c, ..., (see Fig. 2). The connecting arms 23a and the support wall portions 23b have elasticity for enabling these members to be deformed in a predetermined range. The slip-preventing protrusions 23c ..., included in the support portions 23 reduce the influence of the margin of error in the size of the mounting holes 11 ..., formed on the wooden board 9, thereby reducing adverse effects due to the margin of error therein.

As shown in Fig. 2 and Fig. 3, each of the slip-preventing protrusions 21c and 23c are formed with a triangular cross-sectional shape so as to have a tapered face on the side of the perimeter wall face 13. These slit-preventing protrusions have a configuration for facilitating pushing the connecting member 15 into the mounting hole 11, as well as the connecting member 15 engaging with the perimeter wall face 13 of the mounting hole 11 so as to prevent the connecting member 15 from slipping from the mounting hole 11 following the connecting member 15 being pushed into the mounting hole 11. Furthermore, this configuration has the advantage of reducing influence due to irregularities in the inner diameter of the mounting hole 11 due to change in degree of engaging between each of the slip-preventing protrusions 21c and 23c, and the perimeter wall face 13, even in the event that the mounting hole 11 is formed with irregularities in the inner diameter.

### (Assembling of sectional casing)

Description will be made regarding the assembling procedure for the sectional casing 1 with reference to Fig. 1 through Fig. 3. First, each connecting member 15 is pushed into the corresponding mounting hole 11 of the wooden top board 9. The connecting member 15 is formed in a horizontally symmetric manner, and accordingly, there is no need to select a particular inserting direction. With the connecting member 15 pushed into the mounting hole 11, the slip-preventing protrusions 21c and 23c engage with the perimeter wall face 13 (curved portion 13a) of the mounting hole 11 so as to prevent the connecting member 15 from slipping from the mounting hole 11. In the event that the size of the mounting hole 11 is too small due to irregularities in the size thereof, deformation of the perimeter wall 21a or the support portions 23 of the connecting member occurs, and on the other hand, in the event that the size thereof is too large, change in engaging by the slip-preventing protrusions 21c and 23c occurs, thereby reducing the influence due to the margin of error in the size thereof. The slits 21b, ..., enable the perimeter wall 21a to be deformed for the connecting member 15 being elastically supported by the mounting hole 11. Next, the column tip portion 7 of each column 5 is fit to the member body 21 of the corresponding connecting member 15.

At the time of the column tip portion 7 being fit to the member body 21, the engaging protrusion 8a is pressed into contact with the end face of the perimeter wall 21a, whereby the engaging protrusion 8a is retracted, as well as the elastic bending tip 8 being bent and retracted. The retracted engaging protrusion 8a engages with the engaging opening 27 of the perimeter wall 21a, whereby the elastic bending tip 8 is returned to the normal position due to the elasticity thereof. As described above, each engaging protrusion 8a engages with the corresponding engaging opening 27, whereby connection of the columns 5 to the wooden top board 9 through the connecting member 15 is completed. Last, the tray 17 is stored between the columns 5, whereby assembling of the sectional casing 1 is completed.

### (Advantages of the first embodiment)

With the connecting configuration according to the present invention, the columns can be connected to the wooden board without being influenced by the adverse effects due to the margin of error in the size of the mounting holes on the wooden board. Thus, the connecting configuration according to the present invention enables working of wooden boards, which tend to have poor dimensional precision, to be easily performed.

Furthermore, each column 5 is easily and securely connected to the corresponding mounting hole 11 on the wooden top board 9 with the connecting member 15.

### (Modifications of the first embodiment)

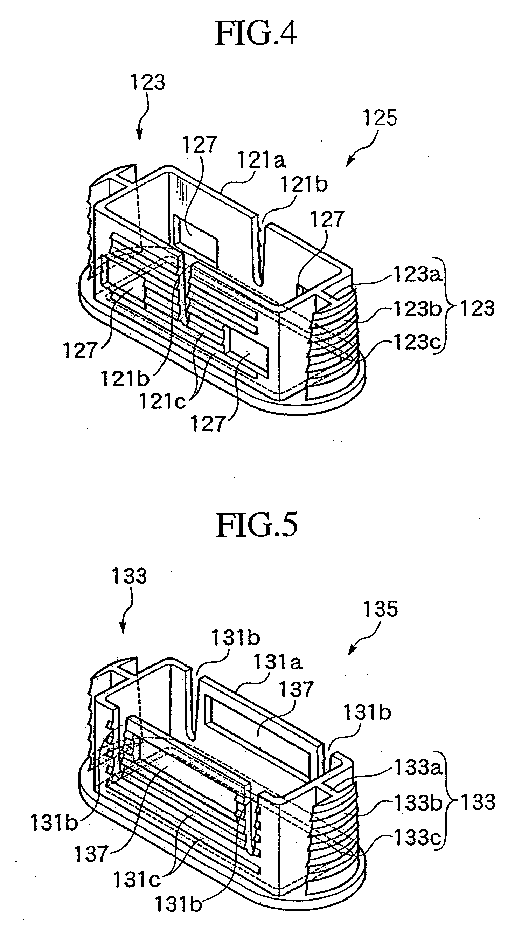

Description will be made regarding modifications of the present embodiment with reference to Fig. 4 through Fig. 6. First, the difference between a first modification shown in Fig. 4 and the present embodiment is the configuration of the engaging openings 27 and the slits 21b. While the configuration according to the present embodiment includes the single engaging opening 27 and the four slits 21b, the configuration according to the first modifications includes the four engaging openings and the two slits. That is to say, a connecting member 125 includes four engaging openings 127, ..., and two slits 121b and 121b, formed on a perimeter wall 121a thereof. These components have the same functions as with the engaging openings 27 and the slits 21b according to the present embodiment. In the same way, a connecting member 135 according to the second modification shown in Fig. 5 includes two engaging openings 137 and 137, and four slits 131b, .... One, two, or more slits are included as necessary.

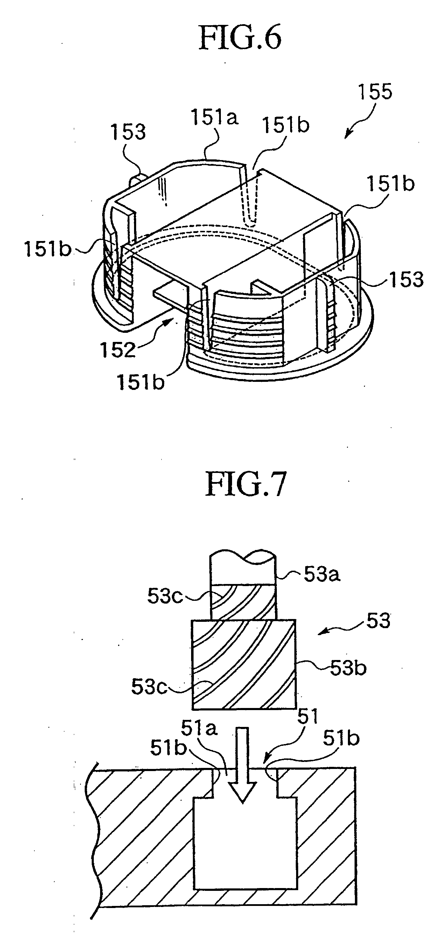

Description will be made regarding a third modification of the present embodiment with reference to Fig. 6. A connecting member 155 according to the third modification includes a perimeter wall 151a generally in the shape of an ellipse, wherein the perimeter wall 151a includes four slits 151b, .... The perimeter wall 151a includes support portions 153 and 153, protruding from the outer face thereof. Furthermore, the perimeter wall 151a includes a fitting configuration 152 formed therein for the column, which is not shown in the drawing, to be fit thereto.

The above-described modifications of the present embodiment has the same basic functions and advantages as with the present embodiment.

While with the present embodiment, description has been made regarding the configuration wherein the column tip portion 7 of the column 5 serves as a member tip portion, as an example, the present invention is not restricted to the particular one, rather the present invention may be applied to configurations wherein the tip portions of various types of members are fit to the engaging openings. Note that other embodiments described later may be applied to the various types of configurations in the same way.

### [Second embodiment]

Description will be made regarding a second embodiment according to the present invention with reference to the appended drawings.

Note that the overall configuration of a sectional casing according to the present embodiment is generally the same as with the sectional casing according to the first embodiment, and accordingly, the same components are denoted by the same reference numerals, and description thereof will be omitted.

### (Basic configuration of sectional casing)

The basic configuration of the sectional casing according to the present embodiment is the same as with the sectional casing 1 according to the first embodiment.

### (Configuration of wooden top board)

While the overall configuration of a wooden top board according to the present embodiment is the same as with the wooden top board 9 according to the first embodiment, the configuration of the mounting holes according to the present embodiment is different from that of the first embodiment.

A mounting hole 51 according to the present embodiment has a configuration as shown in Fig. 7 through Fig. 9. The mounting hole 51 is formed with a cross-sectional inverted T-shape, and is formed generally in the shape of an ellipse in a plan view thereof. The mounting hole 51 includes flange portions 51b on the entrance side 51a for narrowing a part of the entrance thereof as compared with the inside thereof. The flange portion 51b serve as members for securely supporting a connecting member 52 described later.

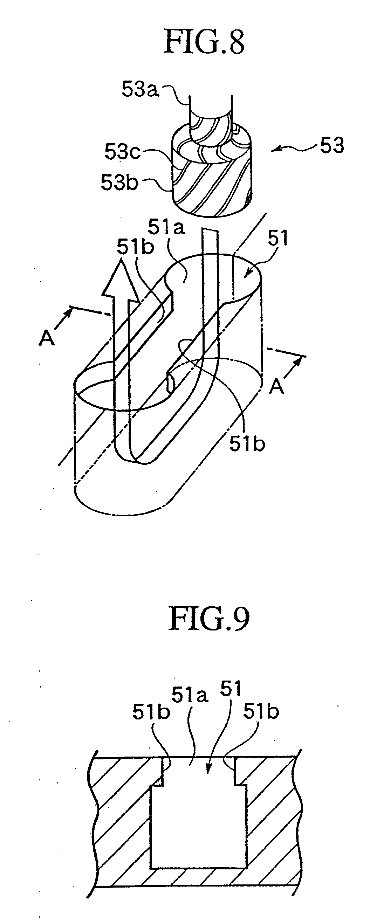

The mounting hole 51 is formed by an end mill 53. The end mil 53 comprises a rotational shaft 53a with a small diameter, and a large-diameter bit 53b with a large diameter, mounted to the tip of the rotational shaft 53a, wherein both the rotational shaft 53a and the large-diameter bit 53b include cutting teeth 53c on the circumferences thereof. A hole is formed in the wooden top board 9 such that the cutting teeth 53c of the large-diameter bit 53b on the tip of the end mill 53 retracts within the hole, following which the end mill 53 is moved in the horizontal direction, and picked up (see Fig. 8). Thus, the mounting hole 51 including the flange portions 51b on the entrance side 51a is formed T-shaped in a cross-sectional view thereof, and the inside thereof is formed generally in the shape of an ellipse in a plan view thereof. That is to say, a hole is formed by the end mill 53, following which the end mill 53 is moved in the horizontal direction so as to cut the inside of the mounting hole 51 with the cutting teeth 53c of the large-diameter bit 53b, as well as cutting the portion on the entrance side 51a of the mounting hole 51 with the cutting teeth 53c of the small-diameter rotational shaft 53a, thereby forming the mounting hole 51c, including the flange portions 51b on the entrance side 51a of the mounting hole 51, with the inner size of the inside thereof larger than that on the entrance side. In this case, the end mill 53 is inserted from one end of the mounting hole 51, and is pulled out from the other end, and accordingly, the mounting hole 51 includes the flange portions 51b on the center portion thereof.

### (Configuration of connecting member)

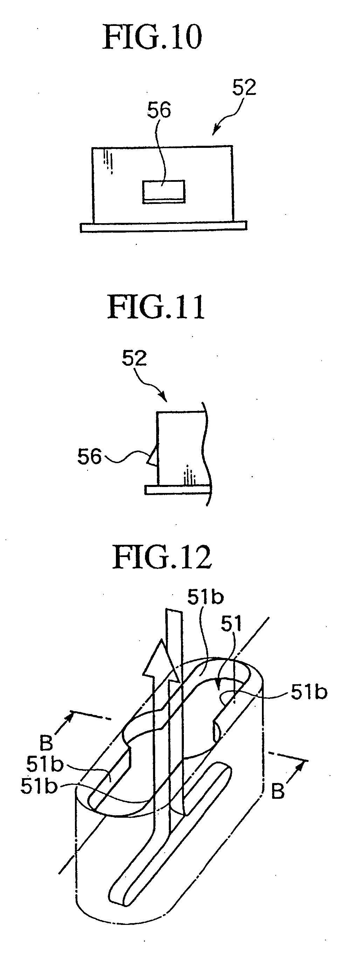

The connecting member 52 has a configuration as shown in Fig. 10 and Fig. 11. The connecting member 52 includes an engaging tip 56 on the side face thereof as a feature. The engaging tip 56 serves as a member for engaging with the flange portions 51b of the mounting hole 51. The engaging tip 56 is included on the center portion of the connecting member 52, corresponding to the positions of the flange portions 51b of the mounting hole 51. The engaging tip 56 is formed so as to protrude therefrom in the shape of a wedge. Thus, with such a configuration, upon the connecting member 52 being pushed into the mounting hole 51, the engaging tip 56 of the connecting member 52 engages with the flange portions 51 of the mounting hole 51, thereby securely mounting the connecting member 52 to the mounting hole 51.

The connecting member 52 has the same basic functions as with the connecting member 15 according to the first embodiment, and the connecting member 52 includes the engaging openings 27 and the like. Furthermore, the connecting member 52 includes the slip-preventing protrusions 21c and 23c, support portions 23, and the like, as necessary.

### (Assembling of sectional casing)

The assembling procedure for the sectional casing according to the present embodiment is generally the same as with the first embodiment.

Upon the connecting member 52 being pushed into the mounting hole 51, the engaging tip 56 of the connecting member 52 engages with the flange portion 51b of the mounting hole 51, thereby mounting the connecting member 52 to the mounting hole 51.

### (Advantages of the second embodiment)

With the connecting configuration according to the present embodiment, the columns can be connected to the wooden board without being influenced by the adverse effects due to the margin of error in the size of the mounting holes on the wooden board in the same way as with the first embodiment. Thus, the connecting configuration according to the present invention enables working of wooden boards, which tend to have poor dimensional precision, to be easily performed.

Furthermore, each connecting member 52 can be securely mounted to the corresponding mounting hole 51, and accordingly, each column 5 is easily and securely connected to the corresponding mounting hole 51.

### (Modifications of the second embodiment)

While in the present embodiment, description has been made regarding a configuration including a connecting member 52, an arrangement may be made wherein each column tip portion 7 is directly pushed into the corresponding mounting hole 51 without the connecting member 52. In this case, the flange portions 51b directly and securely support the column tip portion 7.

While in the present embodiment, description has been made regarding a configuration wherein the flange portions 51b are disposed on the center portion of the mounting hole 51, an arrangement may be made wherein the flange portions are disposed on other portions thereof. For example, as shown in Fig. 12 through Fig. 14, the flange portions 51b. may be disposed on both sides of the mounting hole 51. In this case, a hole is formed on the center portion of the mounting hole 51 by the end mill 53, following which the end mill 53 is moved in the horizontal direction on both the left and the right sides, and is picked up from the center portion thereof. Thus, the mounting hole 51 includes the flange portions 51b on both sides in the longitudinal direction thereof. Furthermore, the connecting member 52 includes the four engaging tips 56 corresponding to the flange portions 51b.

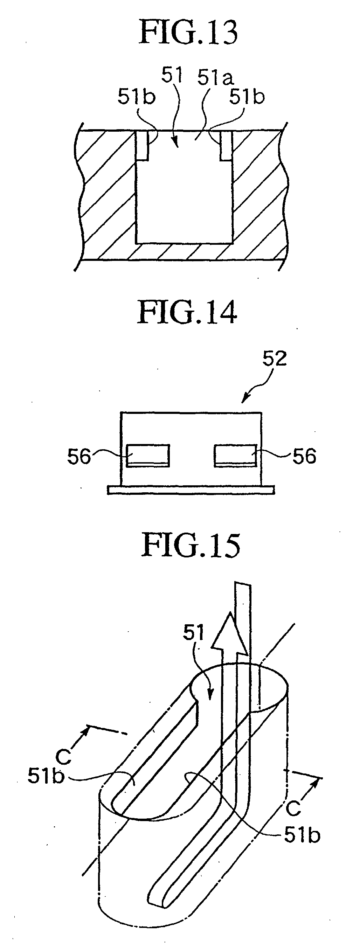

Furthermore, as shown in Fig. 15 through Fig. 17, the mounting hole 51 includes the flange portions 51b over the entire region thereof, except for one end thereof. In this case, a hole is formed on the one end of the mounting hole 51 by the end mill 53, following which the end mill 53 is moved to the other end thereof in the horizontal direction, is moved back to the one end again, and is pulled out therefrom. Thus, the mounting hole 51 includes the flange portions 51b over the entire region thereof, except for the one end of thereof. Furthermore, the connecting member 52 includes the engaging tips 56 over the entire region thereof, except for the one end thereof, corresponding to the flange portions 51b.

Furthermore, while description has been made regarding the end mill 53 having a configuration wherein the large-diameter bit 53b on the tip thereof has the shape of a cylinder, the large-diameter bit 53b may have the shape of a barrel bulging outwards, or a reverse shape. In particular, with a reverse shape wherein the inner wall of the mounting hole 51 bulges inwards, the mounting hole 51 narrows at the intermediate portion thereof, and thus, the connecting member 52 can be more securely mounted to the mounting hole 51.

### [Third embodiment]

Next, description will be made regarding a third embodiment according to the present invention with reference to the appended drawings.

Note that the overall configuration of a sectional casing according to the present embodiment is generally the same as with the sectional casing according to the first embodiment, and accordingly, the same components are denoted by the same reference numerals, and description thereof will be omitted. The basic configuration of the sectional casing and the overall configuration of the wooden top board according to the present embodiment are the same as with the sectional casing 1 according to the first embodiment. The present embodiment has a configuration including a connecting member 61 as a feature.

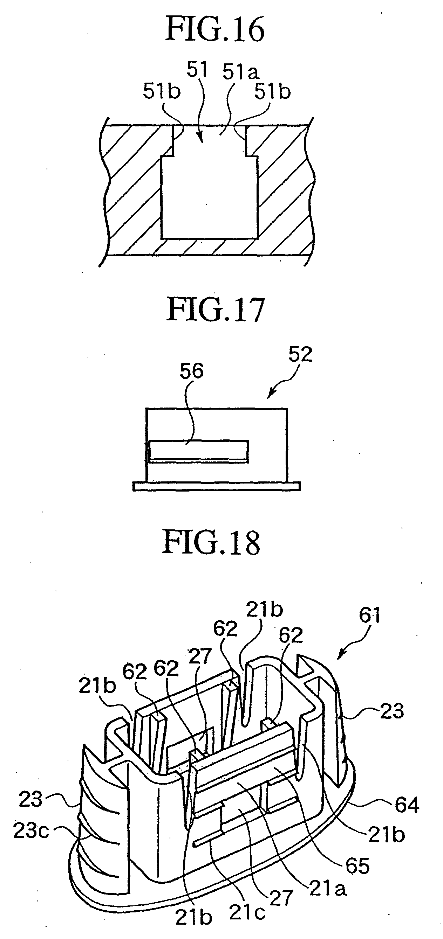

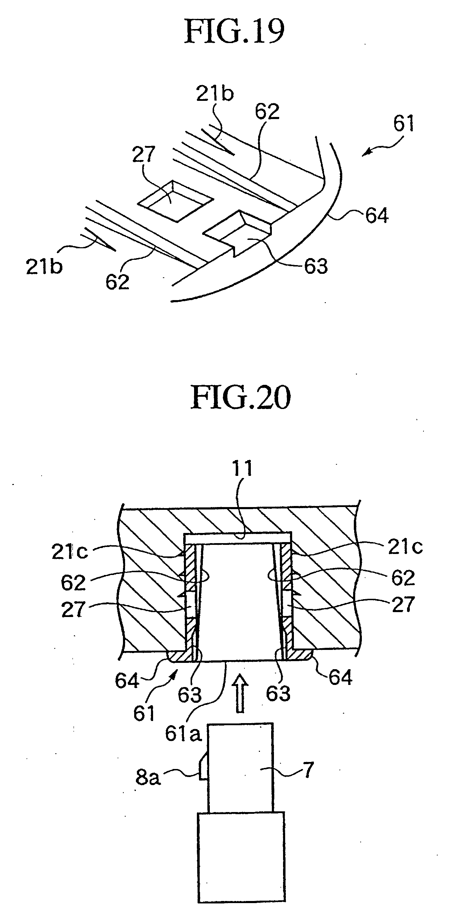

As shown in Fig. 18 through Fig. 20, while the configuration of the connecting member 61 is generally the same as with the connecting member 15 according to the first embodiment, the difference therebetween is that the connecting member 61 includes slope ribs 62, guide portions 63, and an elliptic flange 64. Note that while the numbers of the slip-preventing protrusions 21c and 23c of the connecting member 61 are smaller than with the connecting member 15 according to the first embodiment, an appropriate numbers of the slip-preventing protrusions 21c and 23c may be included.

Of the member body 21, parts of the perimeter wall 21a between the two slits 21b form flexible tips 65 for bending outward at the time of the column tip portion 7 being inserted.

The slope ribs 62 serve members for bending the flexible tips 65 outward at the time of the column tip portion 7 being inserted into the connecting member 61. Each slope rib 62 is formed on the inner face of the flexible tip 65 in the shape of a wedge.

The guide portions 63 serve as members for temporarily fixing the column tip portions 7 to the mounting holes. Each guide portion 63 is formed as a recessed portion on the inner wall face of the member body 21. Specifically, the guide member 63 is a recessed portion formed near an entrance 61a of the connecting member 61 as to the engaging opening 27, with generally the same width as with the engaging opening 27. Thus, at the time of the user mounting the column tip portion 7 to the mounting hole 11, the column tip portion 7 is inserted into the connecting member 61 such that the engaging protrusion 8a is fit to the guide portion 63, thereby temporarily fixing the column tip portion 7 to the mounting hole 11.

The elliptic flange 64 serves as a portion corresponding to the mounting flange 25 of the member body 21 according to the first embodiment, and serves as a member for improving the strength of the member body 21. The elliptic flange 64 is formed in the shape of an ellipse which protrudes around the flexible tips 65.

### (Assembling of sectional casing)

At the time of the user mounting the column tip portion 7 to the mounting hole 11, first, the connecting member 61 is inserted into the mounting hole 11. Next, the engaging protrusion 8a of the column tip portion 7 is fit to the guide portion 63 of the connecting member 61 so that the column tip portion 7 is temporarily fixed to the mounting hole 11. In this state, upon the column tip portion 7 being pushed into the connecting member 61, the column tip portion 7 comes in contact with the slope ribs 62 on the inner face of the flexible tips 65. Upon the column tip portion 7 being further pushed thereinto, the flexible tips 65 bend outward so that the slip-preventing protrusions 21c on the outer face of the flexible tips 65 are pressed into contact with the inner face of the mounting hole 11.

Furthermore, the engaging protrusion 8a of the column tip portion 7 engages with the engaging opening 27 of the connecting member 61, thereby mounting the column tip portion 7 to the mounting hole 11.

### (Advantages of the third embodiment)

With the connecting configuration according to the present embodiment, the columns can be connected to the wooden board without being influenced by the adverse effects due to the margin of error in the size of the mounting holes on the wooden board in the same way as with the first embodiment. Thus, the connecting configuration according to the present invention enables working of wooden boards, which tend to have poor dimensional precision, to be easily performed.

Furthermore, with the present embodiment, the column tip portion 7 can be temporarily fixed to the mounting hole 11, and thus, the column tip portion 7 can be easily mounted to the mounting hole 11.

Furthermore, with the present embodiment, the flexible tips 65 bend outward due to the slope ribs 62, thereby reducing the influence due to irregularities in the inner diameter of the mounting hole 11, as well as preventing the connecting member 61 inserted to the mounting hole 11 from slipping therefrom. As a result, each columns 5 can be securely mounted to the corresponding mounting hole 11.

Furthermore, the elliptic flange 64 improves the strength of the connecting member 61, thereby securely mounting the column tip portion 7 to the mounting hole 11.

### (Modifications of the third embodiment)

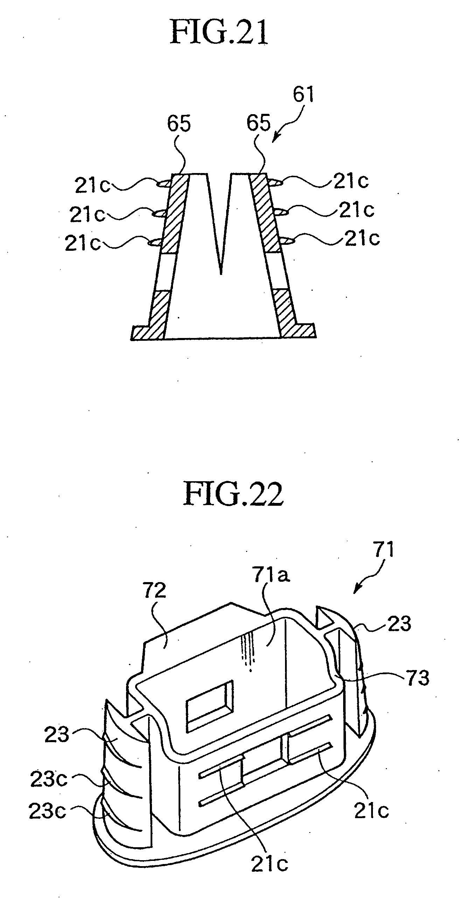

In the present embodiment, while description has been made regarding a configuration wherein the slope ribs 62 are included so as to bend the flexible tips 65 outward, an arrangement may be made wherein the flexible tips 65 themselves are inclined inward, as shown in Fig. 21. In this case, the slip-preventing protrusions 21c on the outer face of each flexible tip 65 are preferably formed with a height which is greater the closer to the tip of the flexible tip 65.

Thus, upon the user inserting the column tip portion 7 into the connecting member 61, the column tip portion 7 is pressed into contact with the inclined flexible tips 65, and accordingly, the flexible tips 65 are bent outward. Upon the user further pushing the column tip portion 7 thereinto, the slip-preventing protrusions 21c on the outer faces of the flexible tips 65 are pressed into contact with the inner wall of the mounting hole 11 so as to engage with the inner wall thereof. As a result, the configuration reduces the influence due to irregularities in the inner diameter of the mounting hole 11, as well as preventing the connecting member 61 inserted to the mounting hole 11 from slipping therefrom, thereby securely mounting the column tip portion 7 to the mounting hole 11.

### [Fourth embodiment]

Next, description will be made regarding a fourth embodiment according to the present invention with reference to the appended drawings.

Note that the overall configuration of a sectional casing according to the present embodiment is generally the same as with the sectional casing according to the first embodiment, and accordingly, the same components are denoted by the same reference numerals, and description thereof will be omitted. The basic configuration of the sectional casing and the like according to the present embodiment are the same as with the sectional casing 1 according to the first embodiment. The present embodiment has a configuration including a connecting member 71 as a feature.

The connecting member 71 according to the present embodiment has a configuration as shown in Fig. 22. The overall configuration of the connecting member 71 is generally the same as with the connecting member 15 according to the first embodiment. However, the connecting member 71 does not include the slits 21b, and has a configuration wherein the perimeter wall 71a hardly bends. The connecting member 71 includes a slit-preventing flange 72 on one side of tip of thereof for engaging with the mounting hole 11. The slip-preventing flange 72 is formed with the edge of one side thereof sharpened. The connecting member 71 includes a curve portion 73 on the other side on the tip thereof. The curve portion 73 serves as a portion for preventing the slip-preventing flange 72 from becoming caught partway along the mounting hole 11 at the time of the user pushing the connecting member 71 into the mounting hole 11.

Note that the slip-preventing protrusions 21c, the support portions 23, and the like, are formed as necessary.

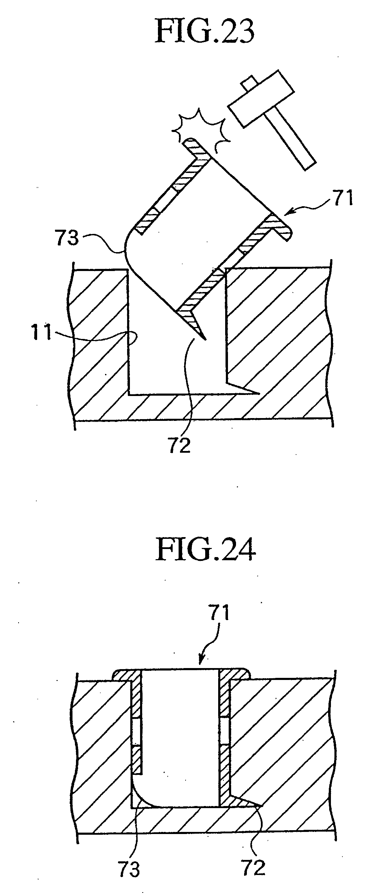

The connecting member 71 having such a configuration is pushed into the mounting hole 11 as follows. First, as shown in Fig. 23, the slip-preventing flange 72 on one side of the tip of the connecting member 71 is inserted into the mounting hole 11, following which the curve portion 73 on the other side of the tip thereof is pushed into the mounting hole 11 by beating the connecting member 71 with a hammer or the like. As a result, as shown in Fig. 24, the connecting member 71 is completely pushed into the mounting hole 11, whereby the slip-preventing flange 72 on the tip of the connecting member 71 engages with the inner face of the mounting hole 11. As a result, the connecting member 71 is securely mounted to the mounting hole 11, whereby the column tip portion 7 is securely mounted to the mounting hole 11.

### [Fifth embodiment]

Next, description will be made regarding a fifth embodiment according to the present invention with reference to the drawings.

### (Basic configuration of organizing casing)

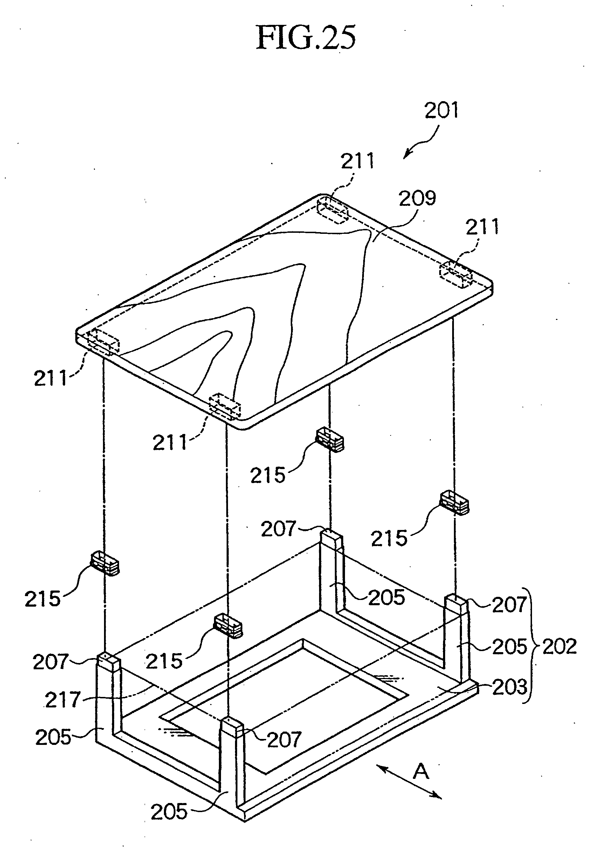

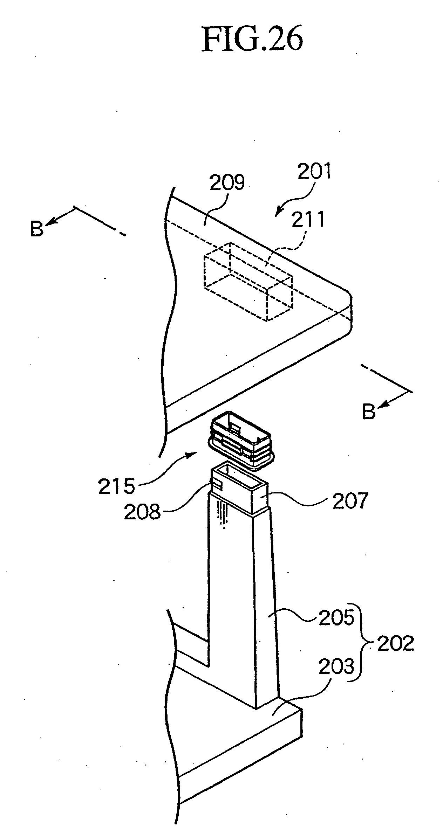

As shown in Fig. 25, a sectional casing 201 comprises a casing main unit 202 formed of plastic, a wooden top board 209 mounted on the upper face of the casing main unit 202, a tray 217 formed of plastic stored within the casing main unit 202. The casing main unit 202 includes a rectangular frame member 203 forming the bottom thereof, four columns 205, ..., each erected from the corners of the rectangular frame member 203. The casing main unit 202 has a configuration wherein the tray 217 denoted by the imaginary lines can be detachably mounted in the direction of the arrow A shown in Fig. 25. While each column 205 is integrally formed with the rectangular frame 203, an arrangement may be made wherein separately formed columns 205 and rectangular frame 203 are assembled. Furthermore, an arrangement may be made wherein side boards (not shown) are mounted on the sides of the casing main unit 202, as viewed from the direction of the tray 217 being detachably mounted. A column tip portion 207 formed on the tip of each column 205 includes an engaging protrusion 208 on the side face thereof. The column tip portion 207 is formed in the shape of a pipe as shown in Fig. 25 and Fig. 26, and accordingly, upon external force is applied to the engaging protrusion 208, the engaging protrusion 208 is bent so as to retract inward. Note that while the casing main unit 202 of the sectional casing 201 shown in Fig. 25 has a configuration including a single casing main unit 202, the sectional casing 201 may have a configuration wherein multiple casing main units 202 are stacked.

### (Configuration of wooden top board)

The wooden top board 209 is formed in a rectangular shape with a somewhat larger size than the casing main unit 202, and includes four mounting holes 211, 211, 211, and 211, formed at positions corresponding to the columns 205 of the casing main unit 202, as shown in Fig. 25. Each mounting hole 211 is formed in a shape such that a connecting member 215 engages therewith. The wooden top board 209 may be formed of a single board formed of wood, or may be formed of a plywood, a particle board formed of wooden particles, or the like. Furthermore, printing a wood grain pattern on the surface of the top wooden board 209, or applying paper with a wood grain pattern print thereupon, is advantageous with regard to appearance.

### (Configuration of connecting member)

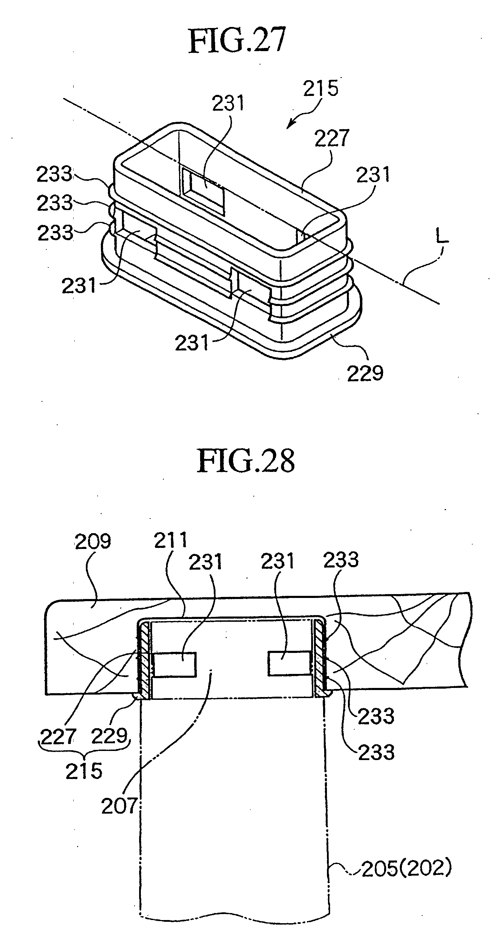

Description will be made regarding the connecting member 215 with reference to Fig. 25 through Fig. 28. The connecting member 215 is formed of plastic. The connecting member 215 includes a pipe member 227 formed such that the column tip portion 207 can be inserted thereto, a mounting rib 229 formed on the bottom of the pipe member 227, four engaging openings 231, 231, 231, and 231, which are through holes formed on the pipe member 227, engaging ribs 233, 233, 233, and 233, formed on the outer face of the pipe member 227. The mounting rib 229 serves as a member for coming in contact with the rear face of the wooden top board 209 so as to prevent looseness of the connecting member 215 at the time of the connecting member 215 being fit to the mounting hole 211 of the wooden top board 209 as shown in Fig. 28. The engaging opening 231 is included for fitting to the engaging protrusion 208 of the column tip portion 207 so as to prevent the column tip portion 207 from slipping from the connecting member 215. That is to say, the engaging openings 231 and the aforementioned engaging protrusion 208 of the column tip portion 207 form an engaging configuration according to the present embodiment. While the connecting member 215 preferably includes multiple engaging ribs 233 for improving engaging effects, an arrangement may be made wherein the connecting member 215 includes at least a single engaging rib 233.

As shown in Fig. 27 and Fig. 28, each slip-preventing rib 233 is formed with a triangular cross-sectional shape so as to have a taper face on the side of the mounting hole 211 of the wooden top board 209. These slit-preventing ribs 233 have a configuration for facilitating pushing the connecting member 215 into the mounting hole 211, as well as the connecting member 215 engaging with the inner side face of the mounting hole 211 so as to prevent the connecting member 215 from slipping from the mounting hole 211. Furthermore, the connecting member 215 is preferably formed with a somewhat larger outer diameter than the inner diameter of the mounting hole 211. The reason is that the connecting member 215 having such a configuration reduces the influence due to irregularities in the inner diameter of the mounting hole 211. That is to say, the connecting member 215 according to the present embodiment is formed of plastic as described above, and accordingly, the connecting member 215 is somewhat deformed. Even in the event that the mounting hole 211 is formed with too small an inner diameter, the connecting member 215 is deformed so as to be fit into the mounting hole 211. On the other hand, even in the event that the mounting hole 211 is formed with too large an inner diameter, the engaging rib 233 reduces the influence due to the margin of error thereof, thereby preventing the connecting member 215 fit into the mounting hole 211 from slipping therefrom.

Furthermore, the connecting member 215 is preferably formed in a horizontally symmetric manner as to the perpendicular plane passing through the broken line L shown in Fig. 27. Thus, the user can fit the connecting member 215 into the mounting hole 211 facing either the left or the right directions indiscriminately. That is to say, at the time of the user fit the connecting member 215, in the event that the connecting member 215 shown in Fig. 27 is rotated by 180° in the horizontal direction, the attitude thereof is equivalent to that prior to rotation, and thus the user can fit the connecting member 215 into the mounting hole 211 facing either the left or the right directions indiscriminately. With the present embodiment, the fact that the user can fit the connecting member 215 into the mounting hole 211 markedly facilitate assembling.

### (Assembling of sectional casing)

Description will be made regarding the assembling procedure for the sectional casing 201 with reference to Fig. 25, Fig. 26, and Fig. 28. First, each connecting member 215 is fit into the mounting hole 211 of the wooden top board 209. The connecting member 215 is formed in a horizontally symmetric manner, and accordingly the user can ft the connecting member 215 into the mounting hole 211 facing either the left or the right directions indiscriminately. With the connecting member 215 fit thereinto, the engaging ribs 233 thereof engage with the inner side face of the mounting hole 211, thereby preventing the connecting member 215 from slipping therefrom. In the event that the mounting hole 211 is formed with too small a size due to irregularities therein, the connecting member 215 is deformed, and on the other hand, in the event that the mounting hole 211 is formed with too large a size, the engaging ribs 233, 233, and 233, reduce the influence due to the margin of error in the size thereof, and thus the connecting member 215 can be fit into the mounting hole 211. Next, the column tip portion 207 of each column 5 is inserted into the connecting member 215. At the time of insertion, the engaging protrusion 208 retracts due to deformation of the column tip portion 207, and upon the engaging protrusion 208 reaching the engaging opening 231 of the connecting member 215, the deformed column tip portion 207 returns to the normal state due to elastic restoration. Upon the column tip portion 207 returning to the normal state due to elastic restoration, the engaging protrusion 208 engages with the engaging opening 231, thereby preventing the connecting member 215 from slipping from the mounting hole 211. Last, the tray 217 is stored between the columns 205 and 205, whereby assembling of the sectional casing 201 is completed.

### (Advantages of the present embodiment)

With the sectional casing according to the present invention, a wooden top board can be mounted to the column tip portions formed of plastic without screws or the like, and without being influenced by adverse effects due the margin of error in the size of the mounting holes formed on the wooden top board.

### (Modifications of the present embodiment)

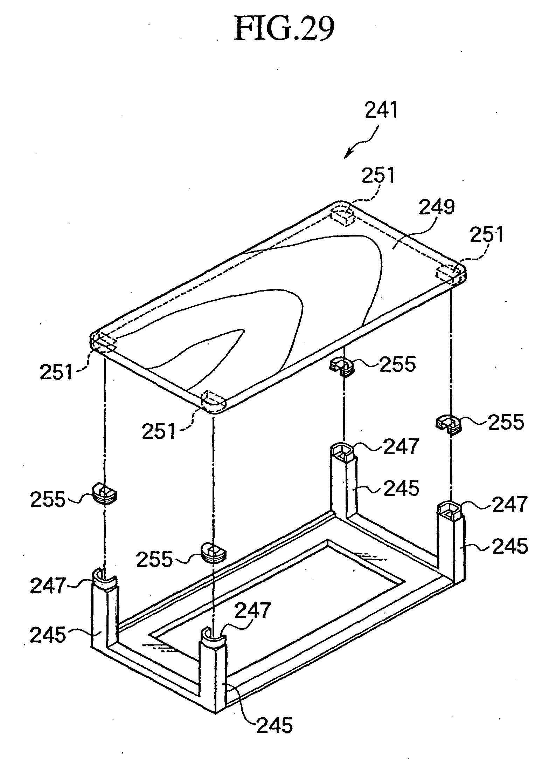

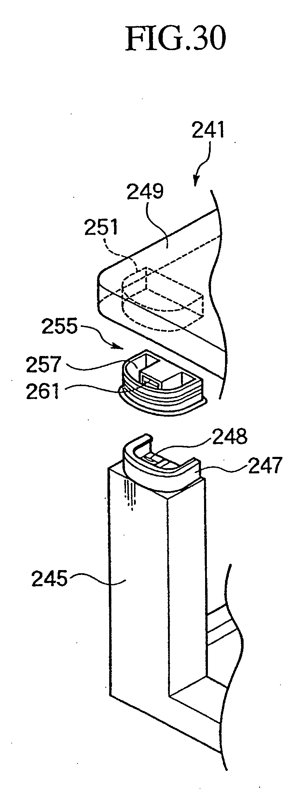

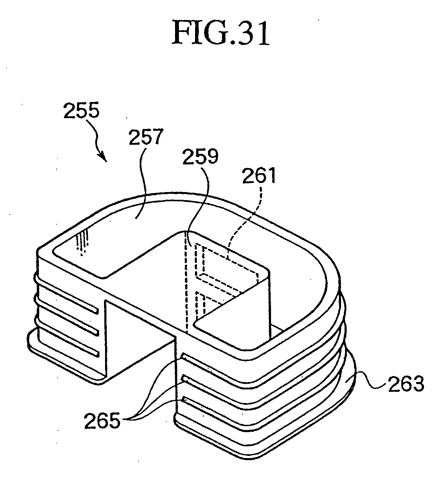

Description will be made regarding a modification according to the present embodiment (which will be referred to as "present modification" hereafter) with reference to Fig. 29 through Fig. 31. The difference between the present modification and the present embodiment is only the configuration of the column tip portion, and the connecting member and the mounting hole, corresponding thereto, and the present modification includes the components and members having the same basic functions as with the present embodiment. Accordingly, description will be made below only regarding components having a different configuration from the present embodiment, and description regarding other components will be omitted for the purpose of avoiding redundant description.

That is to say, with a sectional casing 241 according to the present modification, a column tip portion 247 is formed U-shaped as viewed from the top, on the tip of each column 245, and includes an engaging protrusion 248 on the bottom thereof. On the other hand, a connecting member 255 is formed in an overall general U-shape, corresponding to the shape of the column tip portion 247, and includes a U-shaped groove 257 for the column tip portion 247 being inserted thereinto. The connecting member 255 includes a protrusion 259 protruding inward, which has engaging openings 261 formed thereon, corresponding to the engaging protrusion 248. Reference numeral 263 denotes a mounting rib, and reference numeral 265 denote engaging ribs. The top board 249 includes mounting holes 251, 251, 251, and 251, formed on the rear face thereof, for the connecting members 255 being inserted thereinto.

### Industrial Applicability

While in the above-described embodiments, description has been made regarding an example wherein the connecting configuration according to the present invention for connecting member tip portions to mounting holes is applied to a sectional casing for storing and organizing clothes, small articles, or the like, the connecting configuration according to the present invention may be effectively applied to a connecting configuration for connecting various types of members to mounting holes, even cases other than the sectional casing.

Furthermore, while description has been made regarding a configuration wherein a wooden board includes mounting holes, the present invention may be applied to an arrangement employing a board other than a wooden board.

## Claims

1. A connecting configuration for connecting a member tip portion to a mounting hole;
wherein a connecting member is introduced between said member tip portion and said mounting hole;
and wherein said connecting member comprises: a member body formed so as to be fit to said member tip portion; and support portions provided to said member body, for supporting said member body pushed into said mounting hole.

2. A connecting configuration for connecting a member tip portion to a mounting hole according to Claim 1;
wherein said support portion comprises: a connecting arm extending from the perimeter wall of said member body in the side direction; and a support wall portion provided to the tip of said connecting arm, for pressing into contact with the inner side wall face of said mounting hole so as to support said member body.

3. A connecting configuration for connecting a member tip portion to a mounting hole according to Claim 2, wherein said support wall portion is tapered in the insertion direction.

4. A connecting configuration for connecting a member tip portion to a mounting hole according to any of Claims 1 through 3, wherein said connecting member which is to be pushed into said mounting hole includes protrusions on either or both of said member body and said support portions.

5. A connecting configuration for connecting a member tip portion to a mounting hole according to any of Claims 1 through 3, wherein said member body includes slits on the perimeter wall thereof.

6. A connecting configuration for connecting a member tip portion to a mounting hole according to any of Claims 1 through 3, wherein either or both of said member body and said support portions include slip-preventing protrusions for reducing irregularities in the inner diameter of said mounting hole, as well as preventing said connecting member pushed into said mounting hole from slipping therefrom;
and wherein said member body includes slits on the perimeter wall thereof for reducing the influence due to distortion or deformation of said perimeter wall at the time of said member body being pushed into said mounting hole;
and wherein said member body includes an engaging opening for an engaging protrusion formed on said member tip portion being fit.

7. A connecting configuration for connecting a member tip portion to a mounting hole;
wherein said mounting hole includes flange portions for narrowing a part of the entrance thereof as compared with the inside thereof;
and wherein said flange portions securely support said member tip portion.

8. A connecting configuration for connecting a member tip portion to a mounting hole;
wherein a connecting member is introduced between said member tip portion and said mounting hole;
and wherein said mounting hole includes flange portions for narrowing a part of the entrance thereof as compared with the inside thereof;
and wherein said connecting member includes an engaging tip for engaging with said flange portions.

9. A connecting configuration for connecting a member tip portion to a mounting hole according to Claims 7 or 8, wherein said mounting hole is formed using an end mill having a small-diameter rotational shaft and a large-diameter bit, each of which include cutting teeth on the circumferences thereof;
and wherein the portion of said mounting hole on the entrance side is cut out with said cutting teeth on said small-diameter rotational shaft;
and wherein the portion of said mounting hole on the inside thereof is cut out with said cutting teeth on said large-diameter bit.

10. A connecting configuration for connecting a member tip portion to a mounting hole;
wherein a connecting member is introduced between said member tip portion and said mounting hole;
and wherein said connecting member includes flexible tips for bending outward at the time of insertion of said tip member portion;
and wherein said flexible tips include protrusions on the outer faces thereof.

11. A connecting configuration for connecting a member tip portion to a mounting hole according to Claim 10, wherein said flexible tips include slope ribs in the shape of a wedge on the inner faces thereof for bending said flexible tips outward at the time of insertion of said member tip portion.

12. A connecting configuration for connecting a member tip portion to a mounting hole according to Claim 10, wherein said flexible tips are inclined so as to bend outward due to insertion of said member tip portion.

13. A connecting configuration for connecting a member tip portion to a mounting hole;
wherein a connecting member is introduced between said member tip portion and said mounting hole;
and wherein said connecting member includes a slip-preventing flange on one side of the tip thereof for engaging with said mounting hole.

14. A connecting configuration for connecting a member tip portion to a mounting hole;
wherein a connecting member is introduced between said member tip portion and said mounting hole;
and wherein said connecting member includes an engaging opening for engaging with an engaging protrusion formed on said member tip portion;
and wherein said connecting member further includes a guide portion which is a recessed portion on the inner face thereof, near the entrance of the connecting member as to said engaging opening.

15. A connecting configuration for connecting a member tip portion to a mounting hole,
wherein a connecting member is introduced between said member tip portion and said mounting hole,
and wherein said connecting member includes an elliptic flange on the perimeter of the entrance thereof.
